# EUROPEAN PATENT SPECIFICATION

(11) **EP 2 108 263 B1**
(45) Date of publication and mention of the grant of the patent: **28.09.2011**
(21) Application number: 09156948.3
(22) Date of filing: 31.03.2009
(51) Int. Cl.: A23G 1/26, A23G 3/02, A23G 3/20

(54) **Conveyor plant for moulding lines of confectionery products, particularly of chocolate**
Förderanlage für Formenlinien von Konfektprodukten, vor allem aus Schokolade
Installation de transport pour les lignes de moulage de produits de confiserie, particulièrement de chocolat

(30) Priority: 04.04.2008 IT TO20080263
(43) Date of publication of application: 14.10.2009
(73) Proprietor: Tecnosweet S.r.l., 12051 Alba (Cuneo) (IT)
(72) Inventor: Nesci, Domenico, 12051, Alba (Cuneo) (IT)
(74) Representative: Buzzi, Franco

(56) References cited:
- EP-A- 0 286 778
- EP-A- 0 736 257
- DE-A1- 4 035 392
- DE-A1- 10 124 224
- US-A- 5 591 464

## Description

### Field of the invention

The present invention refers to conveyor plants for moulding lines of confectionery products, particularly of chocolate, in which a plurality of adjacent and spaced moulds (or half-moulds) are moved step by step along a support and guide structure through successive workstations (casting, vibration, demoulding etc.), by means of a motorised conveyor device.

### Prior art

In plants thus made, the motorised conveyor device is typically made up of a pair of closed link chains or belts at whose upper branches the moulds are connected, in a disconectable manner, during their movement along the line proceeding step by step through the successive stations for moulding the products.

Examples of known conveyor plants of the abovementioned type are described and illustrated, for example, in documents EP-A1-0736257 and EP-A1-0583740.

Typically, the moulds (or half-moulds) are made with respective cavities whose positioning at the moulding stations must evidently be accurate to avoid production malfunctions and the ensuing wastage.

In conventional conveyor plants of this type, the connection between the moulds (or half-moulds) and the respective chains or conveyor belts is obtained by means of anchoring members supported by the upper branches of the chains or belts, at predetermined intervals. During operation, closed-link conveyor devices thus made are subjected to inevitable stretching over time which, no matter how limited, shall fatally lead to inaccurate positioning of the moulds with respect to the successive workstations.

Furthermore, such conventional conveyor systems, and in particular those employing chains, are subjected to problems regarding dirt from the confectionery products along the plant, for example in case of chocolate in fluid state, creams etc.

A solution to the above-reference problems is disclosed in US-5,591,464, providing a moulding plant for conveying chocolate molds in which the chains are replaced by conveying screws engaged by studs projecting downwardly from the underside of each mold, whose construction thus needs to be adapted accordingly.

From DE-10124224A1 it is known, in a different field of confectionary production and namely in the art of transporting moulding boxes filled with powders through several stations in a mogul system, a motorised conveyor device corresponding to the precharacterizing part of Claim 1, comprising at least one longitudinal bar arranged along said support structure and bearing a series of pushing members spaced like said moulds, said at least one bar being controllable in rotation between a first angular position wherein said pushing members are inoperative and a second angular position wherein said pushing members engage said moulds from the back, and actuator means for controlling the advancement, by one step, of said at least one bar when it is arranged in said second angular position and its return to the initial position when it is arranged in said first angular position.

### Summary of the invention

The object of the invention is that of overcoming the above drawbacks, and this is achieved according to claim 1.

Further secondary characteristics of the invention are defined in the dependent claims.

### Brief description of the drawings

Now, the invention shall be described in detail with reference to the attached drawings, strictly provided for exemplifying and non-limiting purposes, wherein:
- figure 1 is a top plan schematic view of an example of a conveyor plant for moulding lines of confectionery products according to the invention,
- figure 2 is a schematic perspective view showing one of the rectilinear sections of the conveyor line of figure 1,

- figure 3 is an enlarged sectional view according to line III-III of figure 2,
- figure 4 shows an enlarged detail of figure 2,
- figure 5 shows an enlarged top plan view of one of the curved connection sections between two rectilinear sections of the line,
- figure 6 is a vertical and schematic sectional view according to line VI-VI of figure 5,
- figure 7 shows a first variant of figure 5,
- figure 8 shows a second variant of figure 5, and
- figure 9 is a perspective view of figure 8.

### Detailed description of the invention

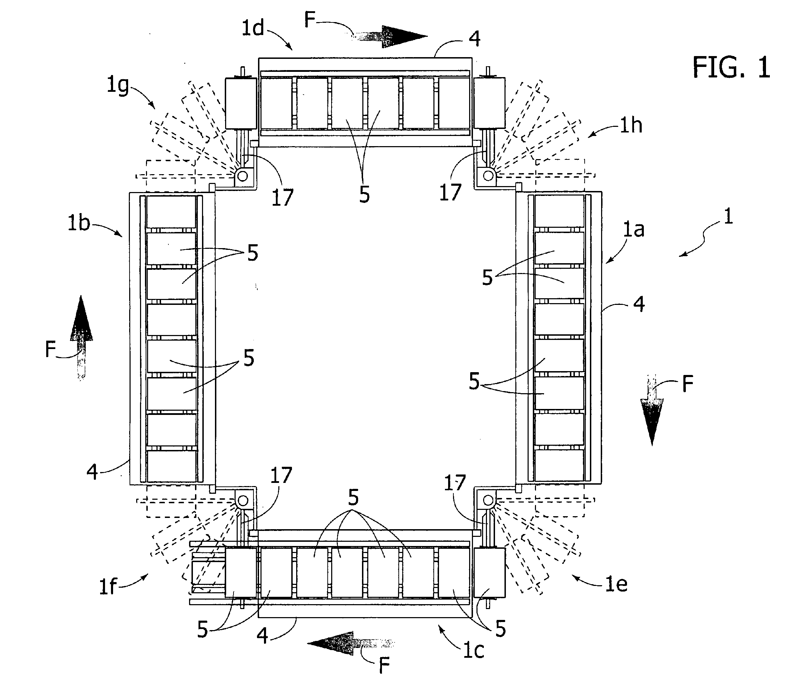

Initially referring to figure 1, a conveyor plant for moulding lines of confectionery products according to the invention is generally indicated, for exemplification purposes, with 1. According to such example, the conveyor plant 1 includes two longer rectilinear sections 1a, 1b and two shorter rectilinear sections 1c, 1d connected together by curved sections 1e, 1f, 1g and 1h.

It should be observed that the general configuration of the conveyor plant 1 could be different from the one illustrated, and also that the line could also include two or more plants analogous to the represented one.

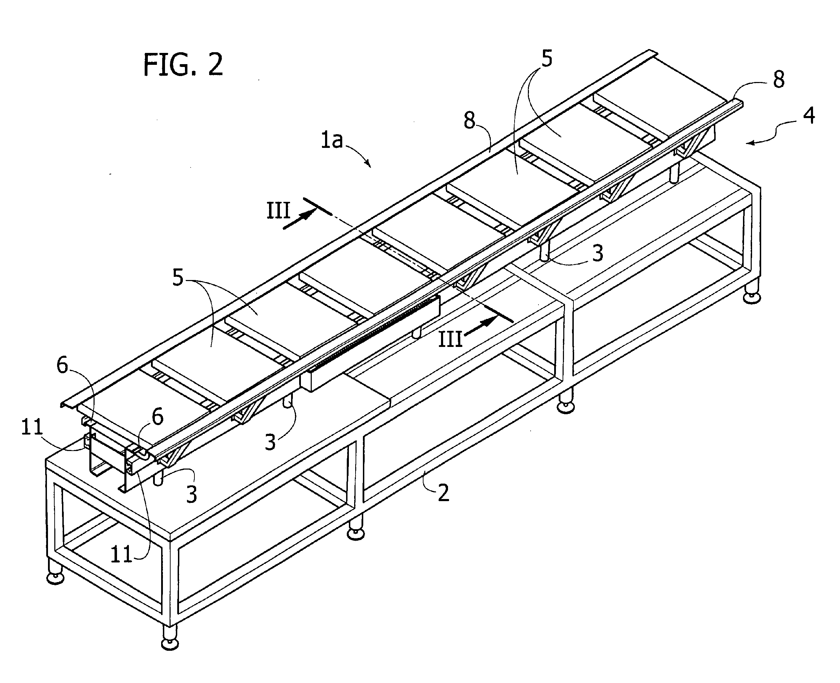

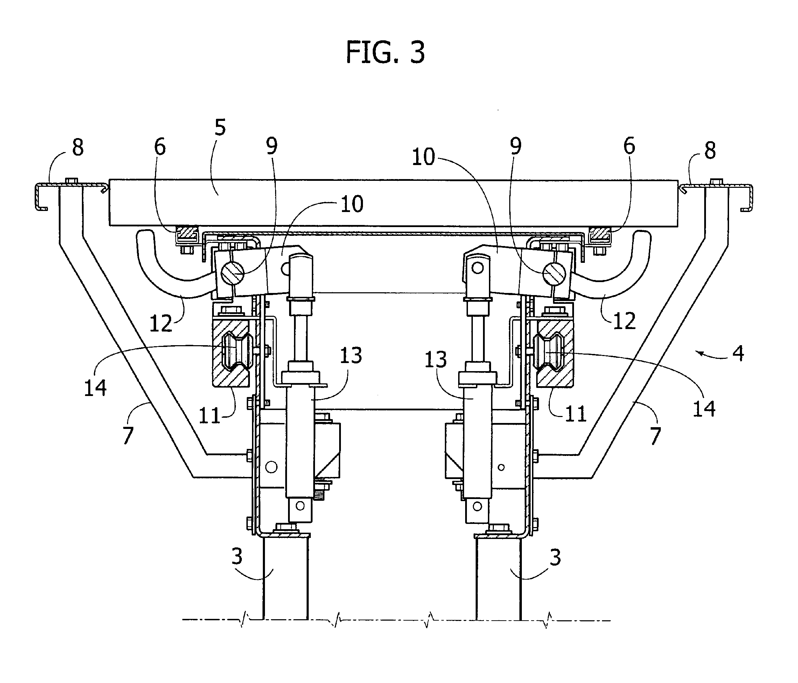

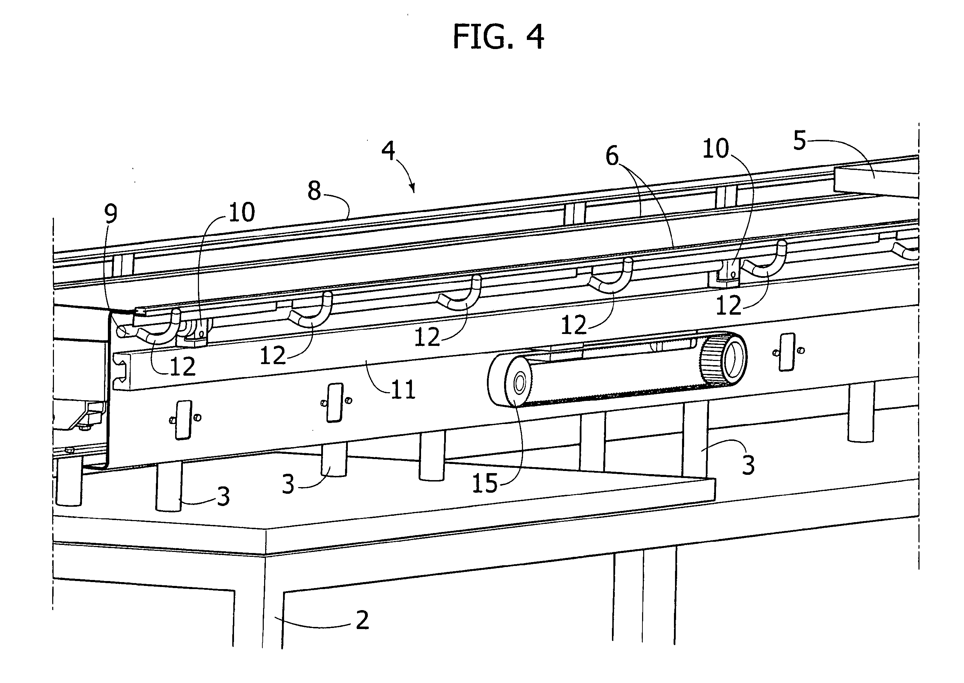

Figures 2, 3 and 4 illustrate in a more detailed manner the rectilinear section 1a with the respective details: however, the following description is also applied in a manner identical to the other sections 1b, 1c and 1d of the conveyor plant 1.

Section 1a essentially comprises a base framework 2 fixed onto which - at the upper part - by means of columns 3, is a guide and support structure generally indicated with 4, moveable along which is a plurality of moulds 5 which - when operating - are moved step by step along such structure 4 through successive work stations, not illustrated.

The moulds 5, which can also be made up of half-moulds, are schematically represented as simple plates: obviously their configuration shall include cavities of various forms and shapes corresponding to those of the confectionery products intended to be moulded along the line.

The moulds 5 are placed, along each of the rectilinear sections 1a, 1b, 1c, 1d briefly spaced from each other, on longitudinal sliding guides 6 with the respective lateral edges facing a pair of lateral guide boards 7. Such lateral guide boards 7 conveniently bear friction elements 8, for example made up of elastic adjustable members in friction contact with the lateral edges of the moulds 5. The adjustment of the friction may for example be performed by adjusting the supports of the boards 7, that serve as levers.

The sliding translation of the moulds 5 along the support guides 6 of the structure 4 is controlled, according to the distinctive aspect of the invention, without requiring closed link chains or belts usually used in the conventional conveyor plants of the same type. Provided for such purpose, beneath the plane defined by the two sliding guides 6, are two longitudinal bars 9 supported by respective support blocks 10 mounted rotating on a pair of longitudinal profiles 11 moveable along the sides of the structure 4.

Each longitudinal bar 9 bears a plurality of curved lateral arms 12 projecting laterally outwards and spaced from each other by a measurement corresponding to the distance between the moulds 5.

The bars 9 rotate integrated with the respective blocks 10 between an angular idle position represented in the drawings, wherein the arms 11 do not interfere with the moulds 5, and an operative position wherein such arms 12 are arranged immediately behind the rear sides (referring to the direction of advancement indicated by the arrows F in figure 1) of the moulds 5. The rotation of each bar 9 between such angular positions is controlled through one or more motorised actuators for example made up, like in the case of the illustrated example, a fluid jack 13.

The support blocks 10, and hence the bars 9 with the latter rotating, are - as mentioned - supported by profiles 11 which have a track-shaped configuration engaged into respective idle rollers 14 supported by the opposite sides of the structure 4.

The profiles 11 are controlled in alternating linear motion by means of an electric motor, for example of the brushless type not shown in the drawings, and a belt drive 15, synchronised with the rotation of the bars 9.

During operation, in order to perform the joint movement of the moulds 5 along the section 1a, the longitudinal bars 9 are first rotated from the lowered inoperative position to the raised operative position, in such a manner - as mentioned - to arrange the respective curved arms 12 within the space comprised between each mould 5 and the adjacent mould. At the end of such rotation, the bars 9 are translated forward by a degree corresponding to the desired step, maintain the respective curved arms 12 in the raised operative position. Thus, such arms 12 operate like flights or pushers, in such a manner to correspondingly translate the moulds 5 from one station to the successive station.

At the end of the movement, the bars 9 are rotated once again to return the curved arms 12 to the lowered inoperative position, and hence the profiles 11 are translated backwards to the initial position.

The description outlined above referring to the rectilinear branch 1a of the line is similarly applied also to the other rectilinear branches 1b, 1c and 1d.

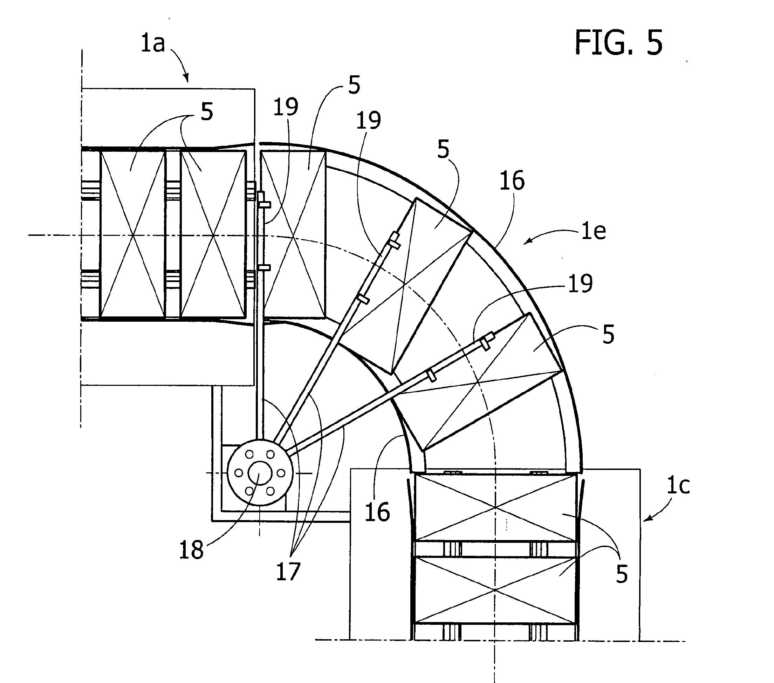

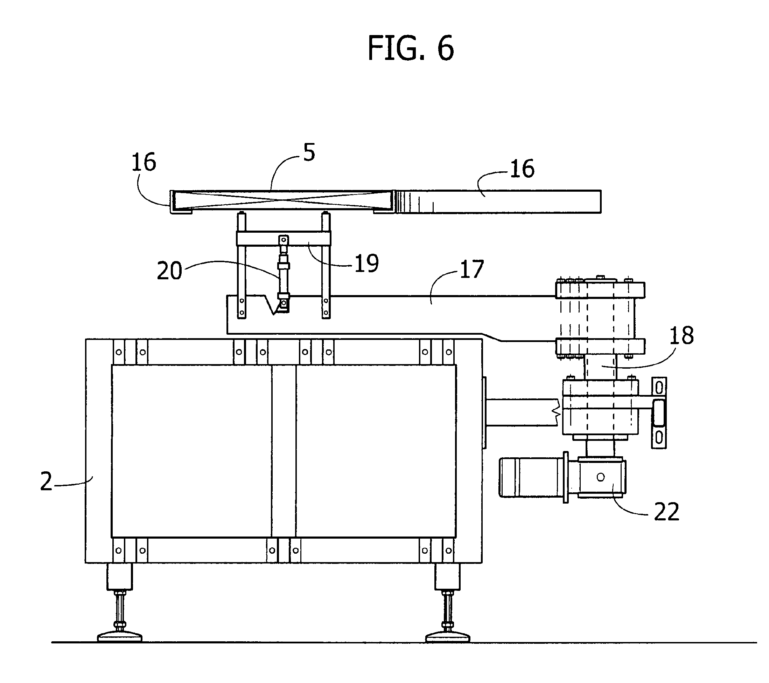

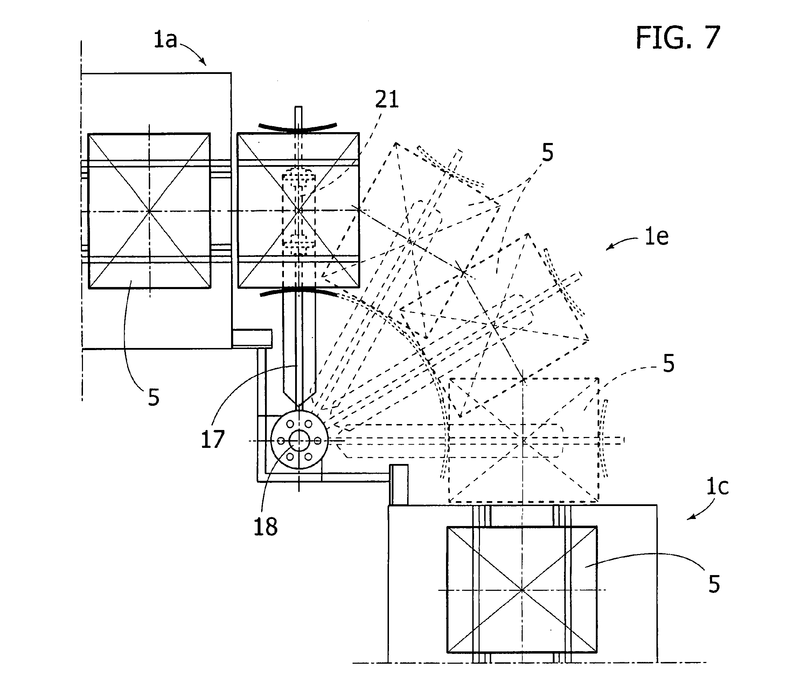

Regarding the connection sections 1e-1h, the invention provides for the arrangement schematically represented in figures 5 and 6, as well as in the variants of figure 7 and figures 8 and 9, referring to the curved section 1e, it being intended that the description is applied in an analogous manner to all the curved sections of the line.

The curved section 1e the restraint and sliding curved guides 16 along which the moulds 5 are moveable according to a 90° arched trajectory by means of rotating arms 17. Such rotating arms 17, whose number varies from one to three or more depending on the size of the moulds 5, are supported by a vertical shaft 18 controlled, through a motorised group 19 supported by the base framework 2, having an alternating rotational motion to rotate the arm/s 17 between a start orthogonal position at the exit from the rectilinear section 1a, and an orthogonal arrival position at the entrance of the rectilinear section 1c of the line. The or each arm 17 is provided with a thrust unit 19 adapted to cooperate from behind with the moulds 5 to push them from the exit of the section 1a at the entrance of the section 1c, along the guides 16, due to the corresponding rotation of the arm 17. The vertical movement of the thrust unit 19 is controlled for example by means of a fluid actuator 20.

Alternatively, the entire arm 17 with the thrust group 19 could be moved vertically along the vertical shaft 18, respectively at the beginning and at the end of its angular travel between the abovementioned start and arrival positions.

Figure 7 illustrates a variant of the curved section 1e, obviously applicable also to other curved sections 1f-1h, wherein the guides 16 are removed and the or each rotating arm 17 bears a motorised gripping device 21, for example of the moveable clamp type, adapted to hold and block - at the lower part - each mould 5 during the transfer rotation between the exit of the rectilinear section 1a and the entrance of the rectilinear section 1c.

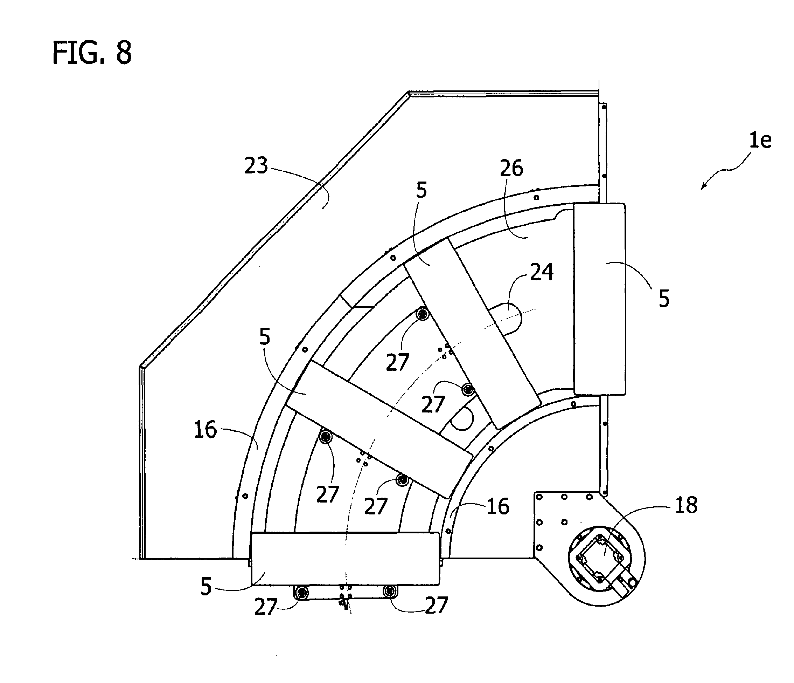

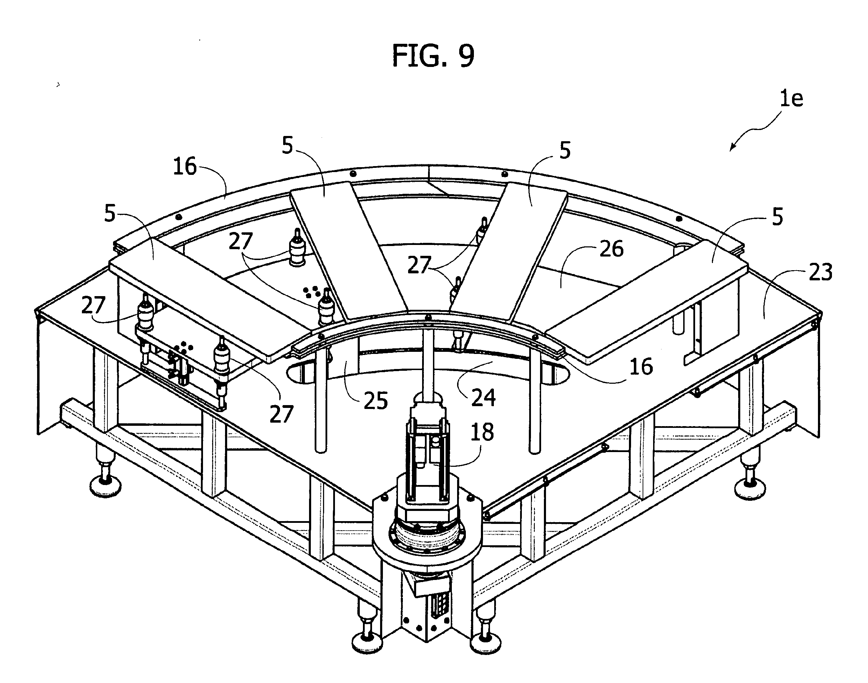

In the case of the variant illustrated in figures 8 and 9 the curved section 1e, and each of the other curved sections 1f-1h, comprises a base 23 which supports the guides 16, having a C-shaped transverse section in this case, and it is made with a curved slit opening 24 through which an upright 25 is moveable connected to a curved plate bearing, 30° angular intervals, three pairs of pusher projections 27. The plate 26 is moveable angularly in an alternating manner, through a motor 18, and the pushers 27 are moveable vertically synchronised with the alternating movement of the plate 26, for example through fluid actuators, between a lowered inoperative position and a raised operative position wherein they cooperate from behind with the moulds 5 to push them from the exit of the section 1a to the entrance of the section 1c, along the guides 16.

Obviously, the embodiments and the construction details as illustrated strictly for simplification purposes in the drawings may widely vary with respect to the description and illustration provided above, without for this reason departing from the scope of the present invention as defined in the following claims.

Thus, for example, though the conveyor device described referring to the rectilinear sections 1a-1d of the line 1 employs two longitudinal bars 9 with the respective thrust arms 12, it is also conceivable to implement an embodiment provided with a single longitudinal bar arranged centrally beneath the movement path of the moulds.

Furthermore, one or more rectilinear branches 1a-1d may be made up of two or more sections, some or all of them motorised, joined together by means of methods not illustrated but known to a man skilled in the art.

## Claims

1. Conveyor plant (1) for moulding lines of confectionery products, particularly of chocolate, wherein a plurality of moulds (5) adjacent and spaced are moved step by step along a guide and support structure (4) through successive workstations by means of a motorised conveyor device, wherein said motorised conveyor device comprises:
- at least one longitudinal bar (9) arranged along said support structure (4) and bearing a series of pushing members (12) spaced like said moulds (5), said at least one bar (9) being controllable in rotation between a first angular position wherein said pushing members (12) are inoperative and a second angular position wherein said pushing members (12) engage said moulds from the rear (5), and
- actuator means (15) for controlling the advancement - by one step - of said at least one bar (9) when it is arranged in said second angular position and its return to the initial position when it is arranged in said first angular position,
**characterised in that** said at least one longitudinal bar (9) is supported in a rotating manner by a respective longitudinal profiled element (11) moveable in alternating rectilinear motion along said guide and support structure (4).

2. Conveyor plant according to claim 1, **characterised in that** said guide and support structure (4) includes a pair of longitudinal supports (6) for the sliding of the moulds (5) and **in that** said motorised device comprises a pair of said longitudinal bars (9) located beneath the plane of said supports (6).

3. Conveyor plant according to claim 1 or 2, **characterised in that** said pushing members consist in curved arms (12).

4. Conveyor plant according to any one of the preceding claims, **characterised in that** said guide and support structure (4) includes lateral friction members (8) for restraining said moulds (5).

5. Conveyor plant according to claim 4, **characterised in that** said friction restraint members (8) are adjustable.

6. Conveyor plant according to one or more of the preceding claims, **characterised in that** said longitudinal profiled element (11) is supported by said structure (4) through rolling members (14).

7. Conveyor plant according to one or more of the preceding claims, **characterised in that** it comprises at least one first and one second rectilinear section (1a, 1c) arranged at 90° from each other and interconnected by a connection section (1e) including means (17, 19; 17, 21) for transferring moulds (5) from said first rectilinear section (1a) to said second rectilinear section (1c).

8. Conveyor plant according to claim 7, **characterised in that** said transfer means include conveyor means (17; 26) moveable in alternating angular motion around a vertical axis (18) for a 90° travel and bearing gripping means (19; 21; 27) moveable between an inoperative condition wherein they do not interfere with the moulds (5) and an operative position wherein the moulds (5) are pushed by said support means (17; 26).

9. Conveyor plant according to claim 8, **characterised in that** said support means comprise a plurality of angularly moveable arms (17).

10. Conveyor plant according to claim 7, **characterised in that** said support means comprise a plate (26) bearing three pairs of gripping projections moveable vertically between a raised operative position and a lowered inoperative position synchronised with the alternating movement of said plate (26).

11. Conveyor plant according to claim 7, **characterised in that** said rectilinear sections (1a, 1c) include a plurality of sections, all or only some of which are motorised.

## Patentansprüche

1. Fördervorrichtung (1) für Formanlagen für Süßwaren, insbesondere aus Schokolade, wobei eine Vielzahl von Formen (5), die zueinander benachbart und voneinander beabstandet sind, mittels einer motorgetriebenen Fördereinrichtung Schritt für Schritt an einer Führungs-und-Trage-Struktur (4) entlang durch aufeinanderfolgende Bearbeitungsstationen bewegt werden, und die motorgetriebene Fördereinrichtung umfasst:
- wenigstens eine Längsschiene (9), die entlang der Tragestruktur (4) angeordnet ist und eine Reihe von Schiebeelementen (12) trägt, die wie die Formen (5) beabstandet sind, wobei die wenigstens eine Schiene (9) bei Drehung zwischen einer ersten Winkelposition, in der sich die Schiebeelemente (12) nicht in Funktion befinden, und einer zweiten Winkelposition gesteuert werden kann, in der die Schiebeelemente (12) von der Rückseite (5) her mit den Formen in Eingriff sind, und
- eine Betätigungseinrichtung (15), mit der die Vorwärtsbewegung der wenigstens einen Schiene (9) um einen Schritt gesteuert wird, wenn sie sich in der zweiten Winkelposition befindet, und ihre Rückkehr an die Ausgangsposition gesteuert wird, wenn sie sich in der ersten Winkelposition befindet,
**dadurch gekennzeichnet, dass** die wenigstens eine Längsschiene (9) drehend von einem entsprechenden Längs-Profilelement (11) getragen wird, das in abwechselnder geradliniger Bewegung an der Führungs-und-Trage-Struktur (4) entlang bewegt werden kann.

2. Fördervorrichtung nach Anspruch 1, **dadurch gekennzeichnet, dass** die Führungs-und-Trage-Struktur (4) ein Paar Längsträger (6) zum Gleiten der Formen (5) enthält und dass die motorgetriebene Einrichtung ein Paar der Längsschienen (9) umfasst, die sich unterhalb der Ebene der Träger (6) befinden.

3. Fördervorrichtung nach Anspruch 1 oder 2, **dadurch gekennzeichnet, dass** die Schiebeelemente aus gekrümmten Armen (12) bestehen.

4. Fördervorrichtung nach einem der vorangehenden Ansprüche, **dadurch gekennzeichnet, dass** die Führungs-und-Trage-Struktur (4) seitliche Reibungselemente (8) enthält, die die Formen (5) bremsen.

5. Fördervorrichtung nach Anspruch 4, **dadurch gekennzeichnet, dass** die Reibungs-Bremselemente (8) verstellt werden können.

6. Fördervorrichtung nach einem oder mehreren der vorangehenden Ansprüche, **dadurch gekennzeichnet, dass** das Längs-Profilelement (11) über Rollelemente (14) von der Struktur (4) getragen wird.

7. Fördervorrichtung nach einem oder mehreren der vorangehenden Ansprüche, **dadurch gekennzeichnet, dass** sie wenigstens einen ersten und einen zweiten geradlinigen Abschnitt (1a, 1c) umfasst, die um 90° zueinander versetzt angeordnet und über einen Verbindungsabschnitt (1e) miteinander verbunden sind, der Einrichtungen (17, 19; 17, 21) zum Überführen von Formen (5) von dem ersten geradlinigen Abschnitt (1a) zu dem zweiten geradlinigen Abschnitt (1c) enthält.

8. Fördervorrichtung nach Anspruch 7, **dadurch gekennzeichnet, dass** die Überführungseinrichtungen Fördereinrichtungen (17; 26), die in abwechselnder Winkelbewegung um eine vertikale Achse (18) über einen Weg von 90° bewegt werden können, sowie tragende Greifeinrichtungen (19; 21; 27) enthalten, die zwischen einem Ruhezustand, in dem sie mit den Formen (5) nicht in Kontakt sind, und einer Funktionsposition bewegt werden können, in der die Formen (5) von den Trageeinrichtungen (17; 26) geschoben werden.

9. Fördervorrichtung nach Anspruch 8, **dadurch gekennzeichnet, dass** die Trageeinrichtungen eine Vielzahl winklig beweglicher Arme (17) umfassen.

10. Fördervorrichtung nach Anspruch 7, **dadurch gekennzeichnet, dass** die Trageeinrichtungen eine Platte (26) umfassen, die drei Paare von Greifvorsprüngen trägt, die synchron zu der abwechselnden Bewegung der Platte (26) vertikal zwischen einer angehobenen Funktionsposition und einer abgesenkten Ruheposition bewegt werden können.

11. Fördervorrichtung nach Anspruch 7, **dadurch gekennzeichnet, dass** die geradlinigen Abschnitte (1a, 1c) eine Vielzahl von Abschnitten enthalten, wobei alle oder nur einige davon motorgetrieben sind.

## Revendications

1. Installation de transport (1) pour les lignes de moulage de produits de confiserie, en particulier du chocolat, dans laquelle une pluralité de moules (5) adjacents et espacés sont déplacés pas à pas le long d'une structure de guidage et de support (4) sur des stations de travail successives au moyen d'un dispositif de transport motorisé, dans laquelle ledit dispositif de transport motorisé comprend :
au moins une barre longitudinale (9) agencée le long de ladite structure de support (4) et supportant une série d'éléments de poussée (12) espacés comme lesdits moules (5), ladite au moins une barre (9) pouvant être commandée en rotation entre une première position angulaire dans laquelle lesdits éléments de poussée (12) ne sont pas opérationnels et une deuxième position angulaire dans laquelle lesdits éléments de poussée (12) mettent en prise lesdits moules depuis l'arrière (5), et
des moyens d'actionnement (15) pour commander l'avancement - par palier - de ladite au moins une barre (9) lorsqu'elle est disposée dans ladite deuxième position angulaire et son retour dans la position initiale lorsqu'elle est disposée dans ladite première position angulaire,
**caractérisée en ce que** ladite au moins une barre longitudinale (9) est supportée d'une manière rotative par un élément profilé longitudinal (11) respectif mobile selon un mouvement rectiligne alternatif le long de ladite structure de guidage et de support (4).

2. Installation de transport selon la revendication 1, **caractérisée en ce que** ladite structure de guidage et de support (4) comprend une paire de supports longitudinaux (6) pour le coulissement des moules (5) et **en ce que** ledit dispositif motorisé comprend une paire desdites barres longitudinales (9), positionnée au-dessous du plan desdits supports (6).

3. Installation de transport selon la revendication 1 ou 2, **caractérisée en ce que** lesdits éléments de poussée se composent de bras incurvés (12).

4. Installation de transport selon l'une quelconque des revendications précédentes, **caractérisée en ce que** ladite structure de guidage et de support (4) comprend des éléments à friction latéraux (8) pour retenir lesdits moules (5).

5. Installation de transport selon la revendication 4, **caractérisée en ce que** lesdits éléments de retenue à friction (8) sont ajustables.

6. Installation de transport selon une ou plusieurs des revendications précédentes, **caractérisée en ce que** ledit élément profilé longitudinal (11) est supporté par ladite structure (4) par le biais d'éléments roulants (14).

7. Installation de transport selon une ou plusieurs des revendications précédentes, **caractérisée en ce qu'**elle comprend au moins une première et une deuxième section rectiligne (1a, 1c) agencées à 90° l'une par rapport à l'autre et interconnectées par une section de raccordement (1e) comprenant des moyens (17, 19 ; 17, 21) pour transférer les moules (5) de ladite première section rectiligne (1a) à ladite deuxième section rectiligne (1c).

8. Installation de transport selon la revendication 7, **caractérisée en ce que** lesdits moyens de transfert comprennent des moyens de transport (17 ; 26) mobiles selon un mouvement angulaire alternatif autour d'un axe vertical (18) pour un déplacement à 90° et des moyens de préhension de palier (19 ; 21 ; 27) mobiles entre une condition non opérationnelle dans laquelle ils n'interfèrent pas avec les moules (5) et une position opérationnelle dans laquelle les moules (5) sont poussés par lesdits moyens de support (17 ; 26).

9. Installation de transport selon la revendication 8, **caractérisée en ce que** lesdits moyens de support comprennent une pluralité de bras mobiles angulairement (17).

10. Installation de transport selon la revendication 7, **caractérisée en ce que** lesdits moyens de support comprennent une plaque (26) supportant trois paires de saillies de préhension mobiles verticalement entre une position opérationnelle levée et une position non opérationnelle abaissée synchronisée avec le mouvement alternatif de ladite plaque (26).

11. Installation de transport selon la revendication 7, **caractérisée en ce que** lesdites sections rectilignes (1a, 1c) comprennent une pluralité de sections, dont toutes ou uniquement certaines sont motorisées.
